# EUROPÄISCHE PATENTANMELDUNG

(11) **EP 1 426 796 A1**
(43) Veröffentlichungstag der Anmeldung: **09.06.2004**
(21) Anmeldenummer: 03013432.4
(22) Anmeldetag: 23.06.2003
(51) Int. Cl.: G02B 6/26

(54) **Vorrichtung zur Einkoppelung elektromagnetischer Strahlung in einen Wellenleiter**

(30) Priorität: 02.12.2002 DE 10256396
(71) Anmelder: Pietralla, Martin, Prof. Dr., 89160 Dornstadt (DE)
(72) Erfinder: Pietralla, Martin, Prof. Dr., 89160 Dornstadt (DE)
(74) Vertreter: Meyer, Thorsten (DE)

(57) **Zusammenfassung**

Die Erfindung betrifft eine Einkoppelungsvorrichtung (1) zur Einkoppelung von im wesentlichen parallel ausgerichteter elektromagnetischer Strahlung über eine parabolische, zylindrische Spiegelfläche und eine hyperbolische, zylindrische Spiegelfläche in einen Wellenleiter. Die Anordnung der Spiegelflächen entspricht dem Cassegram-Prinzip.

## Beschreibung

Die Erfindung betrifft eine Einkoppelungsvorrichtung zur Einkoppelung von im wesentlichen parallel ausgerichteter elektromagnetischer Strahlung in einen Wellenleiter.

In der physikalischen Messtechnik kommt es bei einigen Anwendungen vor, dass von einem Strahler abgegebene Strahlung - beispielsweise Wärmestrahlung - die senkrecht von einer Linie ausgeht genau bestimmt werden muss, und dazu einer Messvorrichtung zugeführt werden muss. Hierzu sind Anordnungen bekannt, bei der ein Bündel aus Lichtleitfasern (IR Fasern) entlang der Linie in Reihe angeordnet installiert wird, wobei das andere Faserbündelende zur Auskopplung der Strahlung an der Messvorrichtung endet. Weiterhin ist bekannt hierzu Zylinderlinsensysteme oder anamorphe Prismen zu verwenden.

Nachteilig bei den bekannten Lösungen ist der hohe Justieraufwand und die fehlende Anpassung der Anordnungsgeometrien an die Apertur der Lichtleitfaser.

Aufgabe der Erfindung ist es eine Einkoppelungsvorrichtung zur Verfügung zu stellen, bei der die Einkopplung von Strahlung in einen Wellenleiter mit einfachen Mitteln ohne großen Justieraufwand ermöglicht ist.

Diese Aufgabe wird durch die Merkmale des Anspruchs 1 gelöst.

Erfindungsgemäß ist vorgesehen, dass reflektierende Flächen dergestalt angeordnet sind, dass die Strahlung von einem schmalen Streifen senkrecht zur Ausbreitungsrichtung der Strahlung in den Wellenleiter eingekoppelt wird, wobei eine erste Spiegelfläche vorgesehen ist, welche die Form einer parabolischen Fläche einer parabolischen prismatischen Säule hat, und eine zweite Spiegelfläche vorgesehen ist, welche die Form einer hyperbolischen Fläche einer hyperbolischen prismatischen Säule hat, wobei die Spiegelflächen so zueinander angeordnet sind, dass der Brennpunkt von der hyperbolischen Fläche und der Brennpunkt von der parabolischen Fläche zusammenfallen.

Vorteilhaft hierbei ist, dass durch die gewählte Anordnung keinerlei Justage mehr durchgeführt werden muss. Die Anpassung auf die Austrittsfläche (schmaler Streifen) ist nicht mehr notwendig. Bisher mussten sonst hier Blenden oder Linsensysteme oder schon erwähnte Faserbündel eingesetzt werden. Eine Fertigung der Einkoppelungsvorrichtung aus einem Stück ist möglich, was zugleich eine besonders vorteilhafte Miniaturisierung der Einkoppelungsvorrichtung ermöglicht, da keine Justierungsvorrichtungen mehr vorzusehen sind. So ist auch eine Herstellung in billiger mikromechanischer Bauart möglich.

Von Vorteil ist der Wellenleiter ein Hohlleiter oder eine Leitfaser für elektromagnetische Strahlung. Hierdurch kann fast jede Form von Strahlung im Wellenleiter geführt werden.

Bevorzugterweise sind die Spiegelflächen so gewählt, dass nur die zur Ausbreitungsrichtung der im wesentlichen parallelen Strahlung senkrechten Anteile eingekoppelt werden. Hierdurch werden Störstrahlungsanteile, die nicht die gewünschte im wesentlichen parallele Ausrichtung haben ausgefiltert.

Von Vorteil wird die Strahlung von im wesentlichen paralleler Ausbreitungsrichtung auf den Aperturwinkel des Wellenleiters transformiert. Hierdurch wird einen optimale Einkopplung in den Akzeptanzwinkel des Wellenleiters ermöglicht, ohne, dass es zu unerwünschten Verlusten kommt.

Eine vorteilhafte Ausgestaltung der Erfindung sieht vor, dass der Raum, in dem die Strahlung zwischen den Spiegelflächen geführt wird evakuiert ist oder mit einem Gas, insbesondere Luft, gefüllt ist.

Vorteilhafterweise sind die Spiegelflächen Außenflächen eines Spiegelflächenträgerkörpers.

Eine bevorzugte Ausgestaltung der Erfindung sieht vor, dass die Strahlung zwischen den Spiegelflächen im Spiegelflächenträgerkörper geführt wird. Dem folgend ist der Spiegelflächenträgerkörper aus einem wenig dispersiven und für die Strahlung transparenten, dielektrischen Medium hergestellt. Von Vorteil ist der Spiegelflächenträgerkörper aus Diamant gefertigt.

Eine vorteilhafte und daher besonders bevorzugte Ausgestaltung der Erfindung sieht vor, dass senkrecht zu der ersten und der zweiten Spiegelfläche zwei parallele den schmalen Streifen an seinen langen Seiten begrenzende, plane Spiegelflächen angeordnet sind. Hierdurch wird eine geschlossene Vorrichtung gebildet, wodurch Störstrahlung ausgeblendet wird, und auch Rückstreuung in die umgebende Apparatur vermieden wird.

Eine besonders bevorzugte Ausgestaltung der Erfindung sieht vor, dass der Wellenleiter eine Lichtleitfaser mit einem virtuellen Brennpunkt ist, welcher virtueller Brennpunkt sich durch den Aperturwinkel der Faser ergibt, wobei die Lichtleitfaser zu der ersten Spiegelfläche so angeordnet ist, dass der virtuelle Brennpunkt der Faser und der zweite Brennpunkt der ersten Spiegelfläche zusammenfallen.

Bevorzugterweise ist ein Lichtdurchtritts-Kanal von der Einkoppelungs-Öffnung des Wellenleiters bis zur ersten Spiegelfläche geführt ist. Hierbei kann der Kanal auch aus vollem Material bestehen, wenn die Strahlung um Spiegelflächenträgerkörper geführt wird.

Der Lichtdurchtritts-Kanal von der Einkoppelungs-Öffnung der Lichtleitfaser bis zur ersten Spiegelfläche ist nach einer Ausgestaltung der Erfindung so ausgestaltet, dass der Lichtdurchtritts-Kanal sich insbesondere mit dem Aperturwinkel der Lichtleitfaser zur ersten Spiegelfläche hin öffnet. Hierdurch wird in optimaler Weise der Platz genutzt und zugleich die optimale Einkopplung gewährleistet, unter Ausblendung von nicht einkoppelbarer Strahlung.

Bevorzugterweise ist der Lichtdurchtritts-Kanal parallel zur durch die Brennpunkte der Speiegelflächen verlaufenden Gerade.

Der Lichtweg ist gemäß einer vorteilhaften und daher bevorzugten Ausgestaltung auch umkehrbar, und die Einkoppelungsvorrichtung so zur Auskopplung von elektromagnetischer Strahlung aus dem Wellenleiter in den schmalen Streifen verwendbar.

Weitere Vorteile, Besonderheiten und zweckmäßige Weiterbildungen der Erfindung ergeben sich aus den weiteren Unteransprüchen oder deren Unterkombinationen.

Nachfolgend wird die Erfindung anhand der Zeichnung weiter erläutert.
- Fig. 1: eine beispielhafte Darstellung einer erfindungsgemäßen Einkoppelungsvorrichtung im Querschnitt,
- Fig. 2: eine schematische Darstellung der Hyperbel und Parabel, sowie deren Anordnung zueinander,
- Fig. 3: eine Querschnittsdarstellung eines Lichtleiters, und
- Fig. 4: eine Aufsicht auf die erfindungsgemäßen Einkoppelungsvorrichtung aus Figur 1.

In den Figuren gleiche Bezugszeichen bezeichnen gleiche oder gleich wirkende Elemente.

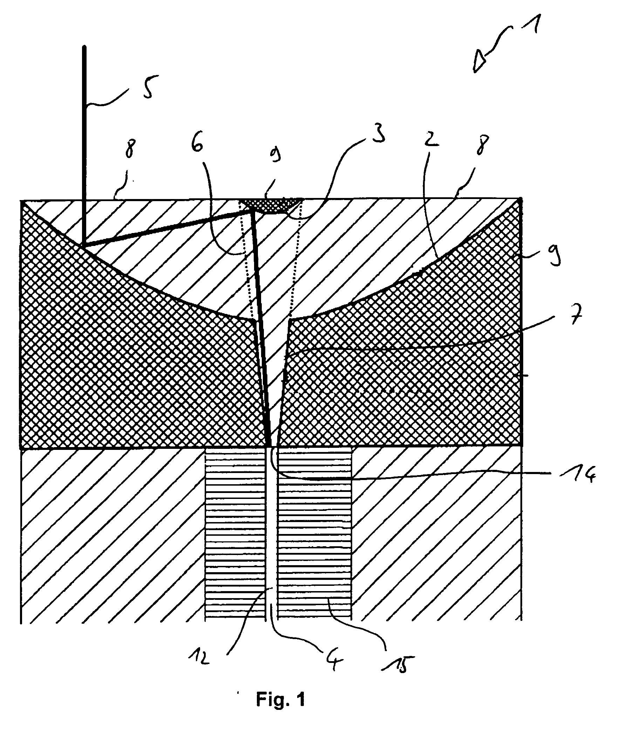

Figur 1 zeigt einen Querschnitt durch eine erfindungsgemäße Einkoppelungsvorrichtung 1, mit zwei reflektierenden Flächen 2, 3. Die reflektierenden Flächen sind als Spiegelflächen für die in der Darstellung von oben durch den schmalen Streifen 8 eintretende Strahlung 5 (ein Lichtstrahl exemplarisch dargestellt) ausgebildet. Der schmale Streifen 8 ist hierbei senkrecht zur Ausbreitungsrichtung der Strahlung.

Als Wellenleiter 4 ist der Lichtleiter 12 vorgesehen. Er weist zum Schutz desselben eine Ummantelung 15 auf.

Die erste Spiegelfläche 2 - auf die die Strahlung zuerst auftrifft - hat die Form einer parabolischen Fläche einer parabolischen prismatischen Säule.

Die zweite Spiegelfläche 3, die mit der von der ersten Spiegelfläche weggespiegelte Strahlung beaufschlagt wird, hat die Form einer hyperbolischen Fläche einer hyperbolischen prismatischen Säule.

Die Spiegelflächen 2, 3 selbst sind Außenflächen eines Spiegelflächenträgerkörpers 9, der aus einem Block gefertigt sein kann. Zur Herstellung der Einkoppelungsvorrichtung sind die Techniken der Mikromechanik eröffnet, ebenso wie herkömmliche Strukturierungstechniken aus der Halbleitertechnik.

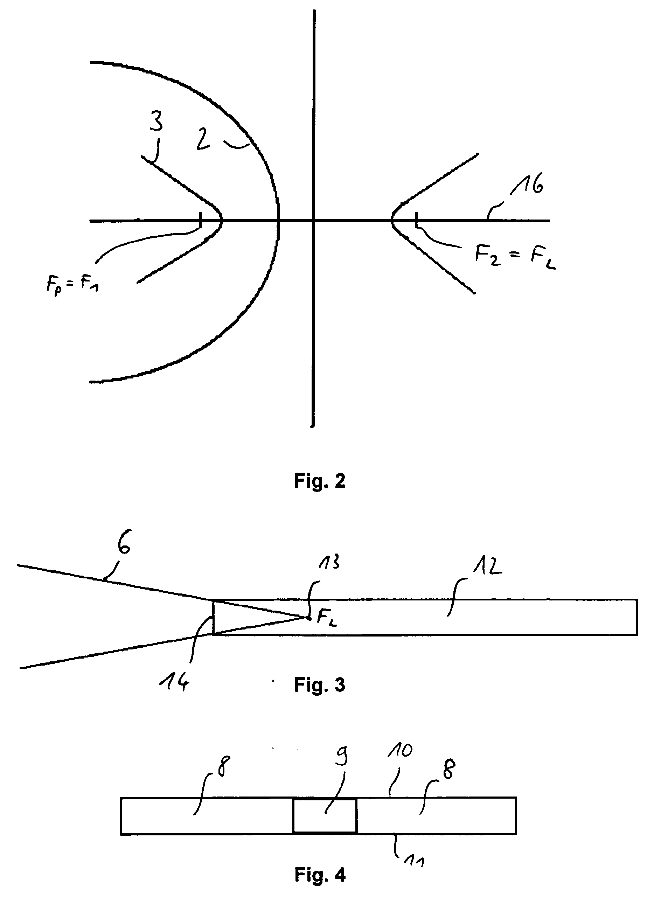

Die erste und zweite Spiegelfläche 2, 3 sind dabei so zueinander angeordnet, dass der Brennpunkt F₁ von der hyperbolischen Fläche 3 und der Brennpunkt F_{P} von der parabolischen Fläche 2 zusammenfallen (siehe hierzu auch Figur 2). Durch diese Wahl der Anordnung der Spiegelflächen 2, 3 werden im wesentlichen nur die zur Ausbreitungsrichtung der im wesentlichen parallelen Strahlung 5 senkrechten Anteile in die Lichtleitfaser 12 eingekoppelt.

Die Strahlung 5 wird von der zweiten Spiegelfläche 3 durch den Lichtdurchtritts-Kanal 7 auf die Einkoppelungs-Öffnung 14 des Lichtleiters 12 gespiegelt.

Die Lichtleitfaser 12 weist einen virtuellen Brennpunkt 13 auf. Siehe hierzu auch Figur 3. Dieser virtuelle Brennpunkt 13 ergibt sich durch den Aperturwinkel der Faser - auch Akzeptanzwinkel genannt , wobei die Lichtleitfaser 12 zu der ersten Spiegelfläche 2 so angeordnet ist, dass der virtuelle Brennpunkt 13 der Faser und der zweite Brennpunkt F₂ der ersten Spiegelfläche 2 zusammenfallen (siehe auch Figur 2). Der Lichtdurchtritts-Kanal 7, der von der Einkoppelungs-Öffnung 14 der Lichtleitfaser 12 bis zur ersten Spiegelfläche 2 geführt ist, öffnet sich mit dem Aperturwinkel 6 der Lichtleitfaser 12 zur ersten Spiegelfläche 2 hin, und verläuft parallel zur durch die Brennpunkte F₁, F₂, F_{P} der Speiegelflächen 2, 3 verlaufenden Gerade.

Der Lichtleiter kann je nach Anwendung, also gewünschter Übertragung der Strahlung, als IR-Lichtleiter, oder als Lichtleiter im optischen Bereich oder auch als UV-Lichtleiter ausgestaltet sein. Bei entsprechend anderen Anwendungen kann der Wellenleiter auch als Hohlleiter ausgestaltet sein.

Die Krümmung der zweiten Spiegelfläche ist so gewählt, dass die Strahlung 5 gleich auf den Aperturwinkel 6 der als Wellenleiters 4 gewählten Lichtleitfaser 12 transformiert wird.

Senkrecht zu der ersten 2 und der zweiten 3 Spiegelfläche zwei parallele den schmalen Streifen 8 an seinen langen Seiten begrenzende, plane Spiegelflächen 10, 11 angeordnet (siehe hierzu auch Figur 4). Dadurch wird die Anordnung geschlossen und gegenüber von Außen einwirkender Störstrahlung als auch gegen Aussenden von eigenerzeugter Störstrahlung geschützt.

Ein großer Vorteil der Erfindung ist, dass durch die gewählte Anordnung keinerlei Justage mehr durchgeführt werden muss. Eine Fertigung der Einkoppelungsvorrichtung aus einem Stück ist möglich, was zugleich eine besonders vorteilhafte Miniaturisierung der Einkoppelungsvorrichtung ermöglicht, da keine Justierungsvorrichtungen mehr vorzusehen sind. So ist auch eine Herstellung in billiger mikromechanischer Bauart möglich.

Durch die vorgeschlagene Ausgestaltung der Einkoppelungsvorrichtung ist der Lichtweg auch umkehrbar, wodurch die Einkoppelungsvorrichtung 1 so zur Auskopplung von elektromagnetischer Strahlung aus dem Lichtleiter 12 in den schmalen Streifen 8 verwendbar ist. Durch die Umkehrung des Lichtwegs ist eine linienhafte Beleuchtung mit parallelem Licht möglich, wodurch beispielsweise eine Spaltausleuchtung durch eine Faser mit einfachsten Mitteln möglich wird.

Durch die vorgeschlagene Anordnung ist eine Integration in faseroptischen Vorrichtungen sehr einfach möglich.

### Bezugszeichenliste

- 1: Einkoppelungsvorrichtung
- 2: erste Spiegelfläche
- 3: zweite Spiegelfläche
- 4: Wellenleiter
- 5: Lichtstrahl
- 6: Aperturwinkel
- 7: Lichtdurchtritts-Kanal
- 8: schmaler Streifen
- 9: Spiegelflächenträgerkörper
- 10, 11: parallele Spiegelflächen
- 12: Lichtleitfaser
- 13: virtueller Brennpunkt
- 14: Einkoppelungs-Öffnung
- 15: Ummantelung
- 16: Gerade
- F_{L}: virtueller Brennpunkt des Lichtleiters
- F₁, F₂: Brennpunkt der Hyperbel
- F_{P}: Brennpunkte der Parabel

## Patentansprüche

1. Einkoppelungsvorrichtung (1) zur Einkoppelung von im wesentlichen parallel ausgerichteter elektromagnetischer Strahlung (5) in einen Wellenleiter (4),
**dadurch gekennzeichnet,**
**dass** reflektierende Flächen (2, 3) dergestalt angeordnet sind, dass die Strahlung von einem schmalen Streifen (8) senkrecht zur Ausbreitungsrichtung der Strahlung in den Wellenleiter (4) eingekoppelt wird, wobei eine erste Spiegelfläche (2) vorgesehen ist, welche die Form einer parabolischen Fläche einer parabolischen prismatischen Säule hat, und eine zweite Spiegelfläche (3) vorgesehen ist, welche die Form einer hyperbolischen Fläche einer hyperbolischen prismatischen Säule hat, wobei die Spiegelflächen (2, 3) so zueinander angeordnet sind, dass der Brennpunkt (F₁) von der hyperbolischen Fläche (3) und der Brennpunkt (F_{P}) von der parabolischen Fläche (2) zusammenfallen.

2. Einkoppelungsvorrichtung nach Anspruch 1,
**dadurch gekennzeichnet,**
**dass** der Wellenleiter (4) ein Hohlleiter oder eine Leitfaser für elektromagnetische Strahlung ist.

3. Einkoppelungsvorrichtung nach Anspruch 1 oder 2,
**dadurch gekennzeichnet,**
**dass** die Spiegelflächen (2, 3) so gewählt sind, dass nur die zur Ausbreitungsrichtung der im wesentlichen parallelen Strahlung senkrechten Anteile eingekoppelt werden.

4. Einkoppelungsvorrichtung nach einem der Ansprüche 1 bis 3,
**dadurch gekennzeichnet,**
**dass** die Strahlung (5) von im wesentlichen paralleler Ausbreitungsrichtung auf den Aperturwinkel (6) des Wellenleiters (4) transformiert wird.

5. Einkoppelungsvorrichtung nach einem der Ansprüche 1 bis 4,
**dadurch gekennzeichnet,**
**dass** der Raum, in dem die Strahlung (5) zwischen den Spiegelflächen (2, 3) geführt wird evakuiert ist oder mit einem Gas, insbesondere Luft, gefüllt ist.

6. Einkoppelungsvorrichtung nach einem der Ansprüche 1 bis 5,
**dadurch gekennzeichnet,**
**dass** die Spiegelflächen (2, 3) Außenflächen eines Spiegelflächenträgerkörpers (9) sind.

7. Einkoppelungsvorrichtung nach einem der Ansprüche 1 bis 4 oder 6,
**dadurch gekennzeichnet,**
**dass** die Strahlung (5) zwischen den Spiegelflächen (2, 3) im Spiegelflächenträgerkörper (9) geführt wird, wobei der Spiegelflächenträgerkörper (9) aus einem wenig dispersiven und für die Strahlung transparenten, dielektrischen Medium hergestellt ist.

8. Einkoppelungsvorrichtung nach einem der vorhergehenden Ansprüche,
**dadurch gekennzeichnet,**
**dass** senkrecht zu der ersten (2) und der zweiten (3) Spiegelfläche zwei parallele den schmalen Streifen an seinen langen Seiten begrenzende, plane Spiegelflächen (10, 11) angeordnet sind.

9. Einkoppelungsvorrichtung nach einem der Ansprüche 1 bis 8,
**dadurch gekennzeichnet,**
**dass** der Wellenleiter (4) eine Lichtleitfaser (12) mit einem virtuellen Brennpunkt (13) ist, welcher virtueller Brennpunkt sich durch den Aperturwinkel der Faser ergibt, wobei die Lichtleitfaser zu der zweiten Spiegelfläche (3) so angeordnet ist, dass der virtuelle Brennpunkt (13) der Faser und der zweite Brennpunkt (F₂) der zweiten Spiegelfläche (3) zusammenfallen.

10. Einkoppelungsvorrichtung nach einem der Ansprüche 1 bis 9,
**dadurch gekennzeichnet,**
**dass** ein Lichtdurchtritts-Kanal (7) von der Einkoppelungs-Öffnung (14) des Wellenleiters (4) bis zur ersten Spiegelfläche (2) geführt ist.

11. Einkoppelungsvorrichtung nach Anspruch 10,
**dadurch gekennzeichnet,**
**dass** der Lichtdurchtritts-Kanal (7) von der Einkoppelungs-Öffnung (14) der Lichtleitfaser (12) bis zur ersten Spiegelfläche (2) geführt ist, wobei der Lichtdurchtritts-Kanal (7) sich insbesondere mit dem Aperturwinkel (6) der Lichtleitfaser (12) zur ersten Spiegelfläche (2) hin öffnet.

12. Einkoppelungsvorrichtung nach einem der Ansprüche 10 oder 11,
**dadurch gekennzeichnet,**
**dass** der Lichtdurchtritts-Kanal (7) parallel zur durch die Brennpunkte (F₁, F₂, F_{P}) der Spiegelflächen (2, 3) verlaufenden Gerade ist.

13. Einkoppelungsvorrichtung nach einem der vorhergehenden Ansprüche,
**dadurch gekennzeichnet,**
**dass** der Lichtweg auch umkehrbar ist, und die Einkoppelungsvorrichtung (1) so zur Auskopplung von elektromagnetischer Strahlung (5) aus dem Wellenleiter (4) in den schmalen Streifen (8) verwendbar ist.
